# EUROPEAN PATENT SPECIFICATION

(11) **EP 3 614 831 B1**
(45) Date of publication and mention of the grant of the patent: **06.04.2022**
(21) Application number: 18791404.9
(22) Date of filing: 19.04.2018
(51) Int. Cl.: A01G 23/083, A01G 23/095, B27B 25/02

(54) **DEBARKING HARVESTER HEAD OF SINGLE-GRIP TYPE**
ENTRINDUNGSERNTEKOPF MIT EINZELGRIFF
TÊTE D'ABATTEUSE ÉCORCEUSE DE TYPE À POIGNÉE UNIQUE

(30) Priority: 28.04.2017 SE 1750516
(43) Date of publication of application: 04.03.2020
(73) Proprietor: Komatsu Forest AB, 907 04 Umeå (SE)
(72) Inventor: LINDBLOM, Anders, 905 83 Umeå (SE)
(74) Representative: Zacco Sweden AB
(86) International application number: PCT/SE2018/050397
(87) International publication number: WO 2018/199833

(56) References cited:
- WO-A1-00/65900
- WO-A1-02/19801
- WO-A1-02/19801
- WO-A1-2007/069913
- DE-A1- 2 536 314
- DE-A1- 2 654 161
- DE-T2- 68 904 560
- SE-L- 7 610 615
- SU-A1- 433 026
- US-A- 3 643 709
- US-A- 3 994 327
- US-A- 4 124 047
- US-A- 4 194 542
- US-A- 5 524 685
- US-A- 5 524 685
- US-A- 5 957 177

## Description

### TECHNICAL FIELD

The present invention concerns a debarking harvester head of single-grip type, according to the introduction to claim 1.

### BACKGROUND ART

For the feed of tree trunks that are to be processed, i.e. trimmed and/or debarked in a harvester head of single-grip type, relatively large feed forces are required. In order to achieve these forces, until now feeders with cylindrical feeder rollers have been used that can be pivoted on grip arms towards and away from each other, each around a shaft that is arranged in the harvester head, which shaft is located at a distance from a longitudinal central plane through the harvester head. Prior art feeder rollers are normally manufactured from metal and are equipped at the circumference with grip means or anti-slip devices. Furthermore, the said feeder rollers are placed with mirror symmetry on each side of the central plane and located in a plane that is perpendicular to the said central plane in the harvester head. That the feeder rollers are designed as cylindrical feeder rollers has the advantage that they make it possible to feed forwards tree trunks that are held fixed between the feeder rollers, also in the cases in which the tree trunks demonstrate very large variations in diameter.

During the production of what is known as "pulpwood", a type of vehicle-mounted harvester head of single-grip type suspended at a crane arm has started to be used in recent years to an ever-increasing degree that, in addition to the conventional logging and cross-cutting steps that a harvester head of single-grip type carries out, i.e. felling, trimming and cutting of tree trunks at specified lengths to logs, also debarks the tree trunk. During the debarking procedure, the tree trunk is caused to rotate around its longitudinal axis in a manner of a spiral while it is fed forwards through the harvester head. What is common for prior art known debarking harvester heads is their limited working capacity.

In order to cause the tree trunk to move in the manner of a spiral around its longitudinal axis, the feeder rollers are equipped with radially protruding cam-like elements with the form of rollers that demonstrate on their surface obliquely set cutting edges, known as "debarking cutters". These cutting edges, which normally run at an angle diagonally or in a spiral manner over the surface in a direction towards the axis of rotation of the feeder roller, have the task not only of penetrating into the tree trunk, but also of causing the tree trunk to rotate such that the bark that surrounds the tree trunk is freed from the tree trunk around its complete circumference. Debarking single-grip harvester heads of this type have their particular field of use during the felling of rapid-growing trees, normally eucalyptus for the production of pulpwood.

For the type of debarking harvester head that has been described above, a further condition for the processing arises that makes it more difficult, in comparison with conventional harvester heads that do not carry out debarking, namely to achieve a grip with the area of grip that is required not only to transfer tensile and compressive forces from the feeder rollers to the tree trunk such that it can be fed through the harvester head in a linear manner, but also to transfer a rotary torque to the tree trunk and to cause it to rotate around its longitudinal axis in the manner of a spiral, while it is feed forwards through the harvester head.

The expression "single-grip harvester head" will be used below to denote the type of well-known harvester head that grips the tree trunk that is to be processed only a single time, and does not release it until it has been processed (cut), trimmed and/or debarked, and cut into appropriate lengths.

A braking effect on the tree trunk arises during the feeding operation of the tree trunk through the harvester head that is caused partly by the resistance to rolling against the tree trunk of the feeder rollers, and partly by the force of friction between the tree trunk and the harvester head when the tree trunk is fed through the harvester head during processing, in particular during trimming.

It should be understood that any pressure damage to the surface wood of the tree trunks or any splits in the tree trunks do not have any influence on product quality that is worthy of mention during the production of pulpwood. In contrast, what is of the greatest interest is a high processing speed and capacity of the harvester head, i.e. the total processing speed or working capacity of the harvester head measured as volume of production per unit time (m³/h).

It is important that the compressive and tensile force-absorbent working surfaces, or outer surfaces, of the feeder rollers that act on each other can create between them a grip with such a large operating area (working area or grip area) that, independently of the current operating conditions of the feeder rollers, they can between them grip and feed forwards with the friction required tree trunks of varying diameter along a trunk feed track that is a component of the harvester head. In other words, the feeder unit must be able, independently of the operating conditions that may include, among other things, the varying diameter of the tree trunk, to transfer such large tensile and compressive forces from the feeder rollers to the tree trunk that it can be fed forwards through the harvester head at high speed.

Deficient control of the tree trunk as it moves through the harvester head and undesired movement relative to the feed track of the harvester head that arise in this way can result in sub-standard trimming results, or that the trimming means, as a result of the changed position of the tree trunk, is caused to cut in the trunk with slipping or, in the worst case, stoppage of the feed as a consequence.

During the gripping of a tree trunk, the disadvantage arises that the feeder rollers, through their cylindrical form, do not always have the ability to bring a gripped tree into effective contact with a feed track that is a component of the harvester head, and instead tend to grip the tree directly between themselves, in particular when larger trees are being processed. A further disadvantage of the said prior art feed arrangements with cylindrical feeder rollers is that the larger the tree is, the smaller will be the inwardly directed forces towards the harvester head that the feeder rollers that are in contact with the tree give rise to, which condition constitutes the direct opposite of the effective grip with large working area, or grip area, and control of the tree during processing that is actually desired.

For the efficient use of the complete volume of each tree trunk from top to root end, it is necessary that the feeder rollers, independently of the diameter of the tree, can remain in close contact with the trunk and create what is known as "close fit", in order in this way to achieve the effective operating grip against the trunk that is necessary for the secure feed of a tree through the harvester head.

As a consequence of the location of the feeder rollers in prior art feed units, where they have mirror symmetry and face each other, the possibilities are limited of increasing the active working area of the feeder rollers against the tree trunk by using, instead of feeder rollers with circularly cylindrical surfaces, feeder rollers whose surfaces provide a considerably more surrounding form against the circumference of the tree trunk. This is the case not least for reasons of available space, and the risk of collision between the feeder rollers that face each other on opposing sides of the tree trunk.

It should be understood that each feed unit must have such properties that it not only makes it possible to maintain control of the tree as it moves during the processing through the harvester head, but also offers high processing speed, and in this way high working capacity.

The total processing speed or working capacity of a harvester head measured as volume of production per unit time (m³/h) thus depends to the greatest degree on the function of the feed unit.

WO 2007/069913 A1 is concerned with a debarking harvester head of single grip type having a feed unit, a frame with a trunk feed track whose direction of transport coincides with a longitudinal axis of a tree trunk that has been taken into the harvester head. The feed unit comprises two of feed units that are each supported on a grip arm for pivoting towards and away from the trunk feed track around an axis that are in the harvester head for each grip arm in order to be able to grip a tree trunk between them. Each feed unit supports a first feeder roller wherein the first feeder rollers are each configured to be rotated around a central axis and comprise radially protruding grip means for penetrating into the tree trunk in order to cause it to rotate around its longitudinal axis such that bark is freed from the circumference of the trunk at the same time as it is fed forwards in the direction of transport. From US 5 524 685 A is known a debarking device and from WO 02/19801 A1 a harvester head for debarking.

### SUMMARY OF THE INVENTION

One purpose of the present invention is to achieve a single-grip debarking harvester head that demonstrates a high working capacity. This purpose of the invention is achieved through a harvester head of single-grip type that has received the distinctive features and characteristics specified in claim 1. Further characteristics and distinctive features of the invention are made clear by the dependent claims.

The starting point of the invention is the type of prior art debarking harvester head in which feed units are incorporated in which pairwise operating cylindrical feeder rollers are located with mirror symmetry on each side of the longitudinal axis of the trunk feed track in order to grip between them and to feed forwards along a trunk feed track tree trunks of varying diameter.

In order to ensure that the varying operating conditions influence to a small extent the working capacity of the harvester head, the feed unit has been equipped with, according to the present invention, at least one further feeder roller, in addition to the generally used pairwise operating first feeder rollers. This second feeder roller is intended to function as a counterpiece that can be rotated against the outer surface of the tree trunk. According to the invention, the first feeder rollers are arranged at such a separation in the direction of transport of the trunk feed track that they form a force-producing pair that acts on the tree trunk and that can apply to the tree trunk a turning torque around a central transverse axis of pivot that runs through the tree trunk, in which the second feeder roller is arranged at such a distance from the said central axis of pivot that it forms a counteracting force that can act through a lever to support the tree trunk such that it is placed in a condition in which the forces and torques are essentially balanced while it moves through the harvester head.

As a consequence of the location of the first feeder rollers on diagonally opposing sides of the trunk feed track, a space is created that makes it possible to, without the risk of collision between opposing feeder rollers, permit not only the use of feeder rollers with considerably larger areas, but also the use of feeder rollers with freely chosen form, with a surface that interacts with a tree trunk. In other words, it will permit the use of feeder rollers that, as a consequence of their form with a significant operating working area, can grip a tree trunk, whereby a significantly improved control of the tree trunk as it moves through the harvester head can be achieved.

The term "diagonal" is used below to denote a line that can unite two non-neighbouring corners of the trunk feed track, when considered to be divided into a set of imaginary quadrants (I, II, III, IV).

### BRIEF DESCRIPTION OF THE DRAWINGS

An embodiment of the invention will be described below in more detail with reference to the attached drawings, of which:
Figure 1 shows a view in perspective of a standing harvester head of single-grip type according to the invention,
Figure 2 shows a view from the front of a feed unit that is a component of the present harvester head, whereby the relative locations of interacting rotatable feeder rollers and rotatable support rollers are shown in more detail,
Figure 3 shows schematically a view in perspective with partially removed parts of a feed unit and a tree trunk during the feed operation,
Figure 4 shows a side view of a lying harvester head of single-grip type with a feed unit that is gripping a tree trunk,
Figure 5A shows an enlarged side view of a feed unit that is gripping a section of a tree trunk with a relatively large diameter, and
Figure 5B shows an enlarged side view of a feed unit that is gripping a section of a tree trunk with a relatively small diameter.

### DETAILED DESCRIPTION OF THE INVENTION

The drawings show a debarking harvester head of the type known as "single-grip", generally denoted by reference number 1, that, in addition to the conventional logging and cross-cutting steps, i.e. felling, trimming and cutting of tree trunk 2 at specified lengths to logs, is of the type that also debarks the tree trunk. For reasons of simplicity, the debarking single-grip harvester head 1 will be referred to below as a "harvester head".

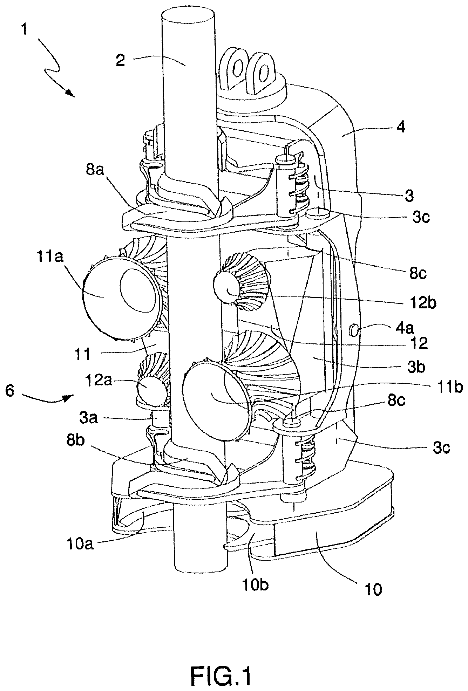

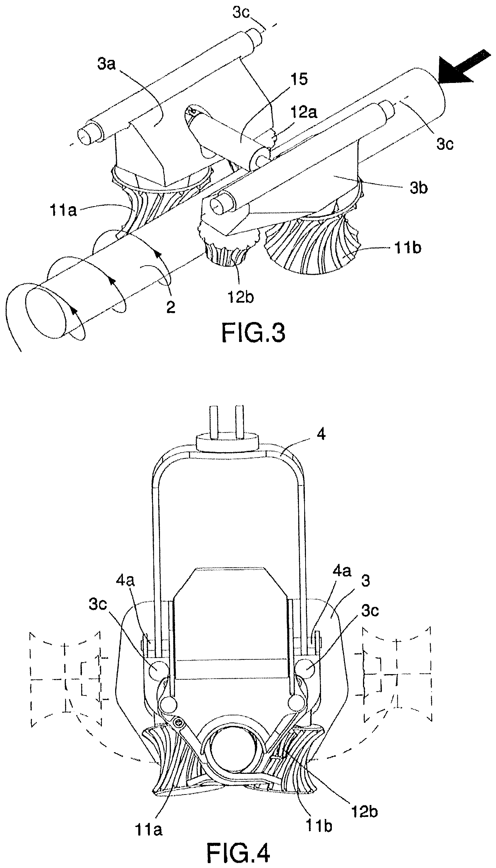

The harvester head 1 has a frame 3 with which it is intended to be mounted through a yoke-shaped fixture arrangement 4 on a displaceable arm of a forestry machine, not shown in the drawings. The frame 3 is jointed at the yoke-shaped fixture arrangement 4 through opposing guide pegs 4a and it can be swivelled around an essentially horizontal axis in order to be changed between a felling position for the felling of trees, in which the harvester head is oriented in an essentially vertical direction, as is shown in Figure 1, and a trimming and processing position, in which the harvester head is oriented in an essentially horizontal direction, as is shown in Figure 4. The positioning of the harvester head at different angles relative to the ground takes place in known manner through a double-action hydraulic cylinder (not shown in the drawings).

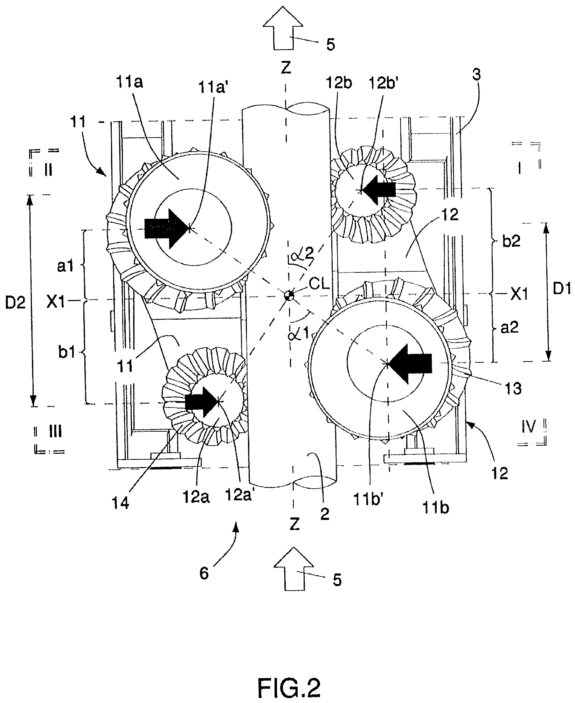

As is illustrated by arrows in Figure 2, the frame 3 defines a trunk feed track 5 whose direction of feed Z extends along a longitudinal axis that coincides with a central plane. The term "trunk feed track 5" is used to denote the pathway along which a tree that has been felled to be trimmed and/or debarked, and cutting is fed with the aid of a feed unit generally denoted by 6 through the harvester head 1 to be processed.

As is made clear by Figures 3 and 4, the trunk feed track 5 may be regarded as essentially horizontal when the harvester head 1 is positioned in its processing position.

With reference once again to Figure 1, the harvester head 1 has two sets of trimming knives, an upper set 8a and a lower set 8b, which are arranged at a distance from each other along the tree feed pathway 5, whereby the feed unit 6 for the feed of tree trunks 2 is, when viewed in the direction of feed, arranged centrally between the said sets of trimming knives.

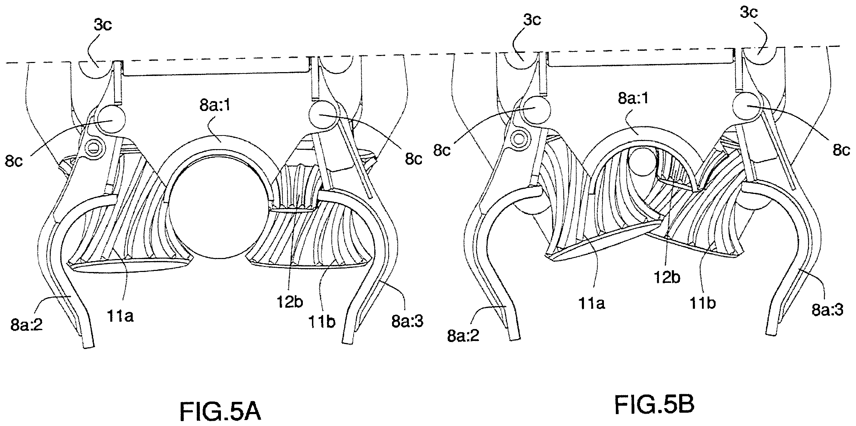

As is shown in Figures 5A and 5B, each set of set of trimming knives 8a and 8b has three knives, one of which 8a:1, 8b:1 is fixed, and two of which 8a:2, 8a:3 and 8b:2, 8b:3 can be displaced, and which together when surrounding a tree trunk form what is known as a "trimming bite". The displaceable knives can each be pivoted by the use of double-action hydraulic cylinders (not shown in the drawings) around an axis 8c that is parallel to the tree feed pathway in order to press the tree trunk 2 from below up against the fixed knife, which forms a fixed support, and to surround the tree trunk together with the fixed knife.

The harvester head 1 is further equipped with a cutting device 10 that in the embodiment described here is constituted in a debarking harvester head by a cutting arrangement with two mutually operating cutting elements 10a, 10b each of which in the frame 3, with its axis parallel to the trunk feed track 5, can be pivoted in towards and away from each other. The said cutting device 10 can not only cut a standing tree at its root, but also a trimmed tree trunk 2 into specified lengths.

With reference to Figure 2, the feed unit 6 comprises, for the feed of felled trees through the harvester head, two first feeder rollers 11a, 11b that can be driven rotated each around a central axis 11a', 11b', respectively, and that can be pivoted on grip arms 3a, 3b towards and away from the trunk feed track each around an axis 3c in the harvester head in order to be able to grip a tree trunk between them.

In addition to the said pair of first feeder rollers 11a, 11b, the feed unit comprises at least one second feeder roller 12a, 12b that can be rotated around a central axis 12a', 12b' and that can also pivot at a grip arm 3a, 3b towards and away from the trunk feed track 5 around an axis 3c in the frame 3 of the harvester head. The two central axes 11a', 11b' of the first feeder rollers 11a, 11b, respectively, are arranged at a such distance from each other when viewed in the direction of transport Z, that they form during the gripping operation a force-producing pair that acts on the tree trunk 2 and that can apply to the tree trunk with a lever a1, a2, respectively, a turning torque around a central axis of pivot CL that passes transversely through the tree trunk. The central axis 12a', 12b' of the second feeder rollers 12a, 12b is arranged at such a distance from the said central point of pivoting CL when viewed in the direction of transport Z, that it forms a counteracting force that can act with a lever b1, b2 to support the tree trunk in order to balance the said torque.

In one execution, the feed unit 6 comprises a first 11 and second feed unit 12 that are located one on each side of the trunk feed track 5 that is a component of the harvester head. The pair of feed units 11, 12 can be displaced towards and away from the trunk feed track each on a grip arm 3a, 3b that is arranged at the frame 3 of the harvester head, which grip arms can be pivoted at a relevant pivot peg each around an axis 3c that is parallel to the trunk feed track, see also Figure 4, such that they can, in the said relevant feed unit, grip and feed forwards tree trunks 2 of varying diameter along the trunk feed track 5.

Figure 3 shows schematically how the grip arms 3a, 3b and in this way the feed units 11, 12 can be mutually displaced by means of a double-action hydraulic cylinder 15 that operates between the said grip arms.

Figure 2 shows that each feed unit 11, 12 comprises a combination of a pair of a first and a second feeder roller 11a, 12a and 11b, 12b, respectively, each of which can be rotated around a central axis 11a', 12a' and 11b', 12b', respectively, and which feeder rollers, when viewed in the direction of feed Z of the trunk feed track 5, are located in a row or in a sequence one after the other. As is made most clear by Figure 2, the first feeder rollers 11a, 11b of the feed units that interact with a tree trunk 2 and the second feeder rollers 12a, 12b are set in a cross configuration to each other and are arranged inversely at the feed units in such a manner that during the gripping operation they are located in diagonally opposing quadrants (I, II, III, IV) of the trunk feed track 5.

As a consequence of the pairwise operating first feeder rollers 11a, 11b being asymmetrically located on diagonally opposing sides of the direction of feed Z of the trunk feed track 5, and of the said second feeder rollers 12a, 12b that act as counterpieces being in the same way located diagonally on opposing sides of the trunk feed track, space is created that makes it possible to use first feeder rollers 11a, 11b with considerably larger working area, even when working with tree trunks that have smaller diameters, whereby the area of interaction that acts against the tree trunk of the feeder rollers can be increased.

The two first feeder rollers 11a, 11b are equipped on the surface that interacts with a tree trunk 2 with radially protruding grip means 13. While the embodiment described here concerns feed units for a harvester head of debarking type, the grip means have been given the form of cam-like elements with obliquely located cutting edges known as "debarking cutters" that run at an angle diagonally or in a spiral manner towards the axis of rotation of the feeder roller. Thus it is the task of these spirally arranged cam-like elements not only to penetrate into the tree trunk, but also to cause the tree trunk to move in a spiral manner around its longitudinal axis such that bark that surrounds the tree trunk is freed from the tree trunk around its complete surrounding circumference.

It should be understood that it is not necessary that the present feed unit be of debarking type: it could just as well be constituted by a feed unit of conventional type whose feeder rollers demonstrate the lack of the features known as "debarking cutters".

According to the invention, the two central axes 11a', 11b' of the first feeder rollers 11a, 11b, respectively, are arranged at a distance from each other in the direction of transport Z, with respect to a central plane X1-X1 that cuts perpendicularly through the tree trunk (2). At the same time, the two first feeder rollers 11a, 11b form in this way a force-producing pair that acts on the tree trunk 2 that can apply to the tree trunk with the levers a1, a2, respectively, a turning torque, i.e. a force around a central point of pivoting whose axis CL, which cuts through tree trunk 2 perpendicularly, lies in the said central plane. The central axes 12a', 12b' of the two second feeder rollers 12a, 12b are arranged when viewed in the direction of transport at such a distance from the said central point of pivoting CL that they form a counteracting force that can act with a levers b1, b2 to support the tree trunk in order to balance the said torque.

As is shown in Figure 3, each feed unit 11, 12 forms an equipment shelf that supports a combination of the said first feeder rollers 11a, 11b and the said second feeder rollers 12a, 12b. Through the influence of a double-action hydraulic cylinder 15, the said combination of pairwise operating feed units 11, 12 with first and second feeder rollers 11a, 12a and 11b, 12b, respectively, can be displaced towards and away from the trunk feed track 5 in order to grip between them a tree trunk 2 of varying diameter.

As is made clear by Figure 2, the levers or torque arms a1, a2 between the central axes 11a', 11b' of the first feeder rollers 11a, 11b and the central point of pivoting CL are shorter than the levers b1, b2 between the central axes 12a', 12b' of the second feeder rollers 12a, 12b and the central point of pivoting CL. The relative geometry that has been selected results in a centre line that runs diagonally through the central axes 11a', 11b' of the two first feeder rollers a, 11b and a centre line that runs diagonally through the central axes 12a', 12b' of the two second feeder rollers 12a, 12b each intersect a longitudinal axis that coincides with the direction of transport Z of the trunk feed track 5 at an acute angle α1, α2.

The perpendicular distance between the axes of rotation 11a', 11b' of the two first feeder rollers 11a, 11b and the longitudinal axis Z of the trunk feed track 5 is greater than the perpendicular distance between the central axes 12a', 12b' of the two second feeder rollers 12a, 12b. Furthermore, the absolute distance D1 between the central axes 11a', 11b' of the two first feeder rollers 11a, 11b is shorter than the absolute distance D2 between the central axes 12a', 12b' of the two second feeder rollers 12a, 12b, with respect to a longitudinal axis that coincides with the direction of transport Z of the trunk feed track (5).

It should be understood that the first feeder roller 11a, 11b that is a component of each feed unit 11, 12 is driven in a manner that allows rotation by a motor that is integral to the feed unit and demonstrates a surface with a working area that operates against a tree trunk 2 that is larger than the working area of the surface of the two second feeder rollers 12a, 12b. In order to offer good grip and a large working area, the two first feeder rollers 11a, 11b have a form that is essentially shaped as an hourglass, whose surface that interacts with a tree trunk 2, when viewed in axial section through the central axes 11a', 11b' of the rollers, demonstrates an arc that is generated by a generatrix and that is principally concave or curved in the direction in towards the said axis. As a consequence of the hourglass form, a surface with what can be most accurately considered to be a circular segment is obtained that can surround and interact with a considerable part of the circumference of the tree trunk 2.

In an alternative execution, also the second feeder rollers 12a, 12b may comprise a drive motor that is integral to the equipment shelf for operation in a manner that allows rotation.

In a second alternative execution, the second feeder rollers 12a, 12b may be constituted by feeder rollers that can rotate freely, known as "transfer rollers", each one of which has been given the form of a truncated cone or a juggling club whose surface that interacts with a tree trunk 2, when viewed in axial section through the central axes 12a', 12b' of the rollers, demonstrates an arc that is generated by a generatrix and that is essentially concave or curved in towards the said axis, but whose arc length is shorter than the arc length of the first feeder rollers 11a, 11b. Through the longer levers b1, b2 between the central axes 12a', 12b' of the second feeder rollers 12a, 12b and the central point of pivoting CL the point of attack has been moved outwards, which in turn results in the force of contact of the second feeder rollers 12a, 12b onto the tree trunk 2 being lower given an opposing force that corresponds to the force of contact of the first feeder rollers 11a, 11b onto the tree trunk. The different forces of contact against the tree trunk 2 of the first and second feeder rollers 11a, 11b and 12a, 12b, respectively, when corresponding but opposing balancing forces are achieved are illustrated by force arrows of different sizes in Figure 2.

As a consequence of the relatively lower force of contact of the second feeder rollers 12a, 12b, even though the levers b1, b2 are longer, the requirement for the operative working area or surface area between the second feeder rollers 12a, 12b and the tree trunk 2 is lower. As a consequence, it is possible to assign a relatively small surface area to the second feeder rollers 12a, 12b that, in this embodiment, demonstrate the form of an arc that is formed by a generatrix and that is essentially concave or curved in towards the said axis and which arc can be most accurately considered to be a partially circular segment that interacts over a limited working area with a relatively small part of the circumference of the tree trunk 2.

## Claims

1. A debarking harvester head (1) of single-grip type, comprising
a feed unit (6),
a frame (3) with a trunk feed track (5) whose direction of transport (Z) coincides with a longitudinal axis of a tree trunk (2) that has been taken into the harvester head, and where the said feed unit comprises,
two of feed units (11, 12) that are each supported on a grip arm (3a, 3b) for pivoting towards and away from the trunk feed track (5) around an axis (3c) that are in the harvester head for each grip arm, in order to be able to grip a tree trunk (2) between them,
whereby each feed unit (11, 12) supports a combination of a pair of a first feeder roller (11a, 11b) and a second feeder roller (12a, 12b)
wherein
the first feeder rollers (11a, 11b) are each configured to be rotated around a central axis (11a', 11b') and comprise radially protruding grip means (13, 14) for penetrating into the tree trunk in order to cause it to rotate around its longitudinal axis such that bark is freed from the circumference of the trunk at the same time as it is fed forwards in the direction of transport,
and
the second feeder rollers (12a, 12b) are each configured to be rotated around a central axis (12a', 12b'),
whereby the two central axes (11a', 11b') of first feeder rollers (11a, 11b), respectively, are arranged at a such distance from each other when viewed in the direction of transport (Z) that they form during the gripping operation a force-producing pair that acts on the tree trunk (2) that can apply to the tree trunk with a lever (a1, a2), respectively, a turning torque around a central axis of pivot (CL) that passes transversely through the tree trunk, and the two central axes (12a', 12b') of the second feeder rollers (12a, 12b) respectively, are arranged at such a distance from the central axis of pivot (CL) when viewed in the direction of transport (Z) that they together form a counteracting force that can act with a relevant lever (b1, b2) to support the tree trunk,

2. The harvester head according to claim 1, whereby the first and second feeder rollers (11a, 12a and 11b, 12b, respectively) that are arranged in pairs on each feeder unit (11, 12), when viewed in the direction of transport (Z), are inversely supported on the relevant feed unit (11, 12) in such a manner that the said first and second feeder rollers are, when in interaction with a tree trunk (2), in a mutual cross configuration and are located in diagonally opposing imaginary quadrants (I, II, III, IV) of the trunk feed track (5).

3. The harvester head according to any of claims 1-2, whereby the levers (a1, a2) between the central axes (11a', 11b') of the first feeder rollers (11a, 11b) and the central point of pivoting (CL) are shorter than the levers (b1, b2) between the central axes (12a', 12b') of the second feeder rollers (12a, 12b) and the central point of pivoting (CL).

4. The harvester head according to of the claims 1-3, whereby the first feeder roller (11a, 11b) that is a component of each feed unit (11, 12) is driven in a manner that allows rotation and demonstrates a surface with a larger operating working area against the tree trunk (2) than a surface of the second feeder roller (12a, 12b) that is a component of the feed unit.

5. The harvester head according to any one of claims 1-4, whereby a centre line that runs diagonally through the central axes (11a', 11b') of the two first feeder rollers (11a, 11b) and a centre line that runs diagonally through the central axes (12a', 12b') of the two second feeder rollers (12a, 12b) each intersect a longitudinal axis that coincides with the direction of transport (Z) of the trunk feed track (5) at an acute angle (α1, α2).

6. The harvester head according to any one of claims 1-5, whereby the absolute distance (D1) between the central axes (11a', 11b') of the two first feeder rollers (11a, 11b) is shorter than the absolute distance (D2) between the central axes (12a', 12b') of the two second feeder rollers (12a, 12b), with respect to a longitudinal axis that coincides with the direction of transport (Z) of the trunk feed track (5).

7. The harvester head according to any one of claims 1-6, whereby each one of the said second feeder rollers (12a, 12b) may comprise an integral drive motor for operation in a manner that allows rotation of the feeder roller, or is constituted by feeder rollers, known as transfer rollers, that are freely rotatable.

8. The harvester head according to any one of claims 1-7, whereby each first feeder roller (11a, 11b) has a form that is essentially shaped as an hourglass, and whose surface that interacts with a tree trunk, when viewed in axial section through the central axes (11a', 11b') of the rollers, demonstrates an arc that is generated by a generatrix and that is concave or curved in the direction in towards the said central axis.

9. The harvester head according to claim 8, whereby each second feeder roller (12a, 12b) has the form of a truncated cone whose surface that interacts with a tree trunk, when viewed in axial section through the central axes (12a', 12b') of the rollers, demonstrates an arc that is generated by a generatrix and that is concave or curved in towards the said axis, but whose arc length is shorter than that of the first feeder rollers.

10. The harvester head according to any one of claims 1-9, whereby not only each first feeder roller (11a, 11b) but also each second feeder roller (12a, 12b) is equipped on its working surface with radially protruding grip means (13, 14) intended to penetrate into a tree trunk (2).

11. The harvester head according to claim 10, whereby the grip means (13) of the first feeder rollers (11a, 11b) comprises a series of radially protruding cam-like elements that, during the formation of debarking cutters, run in a spiral manner across the surface.

## Patentansprüche

1. Entrindungserntemaschinenkopf (1) vom Ein-Griff-Typ, umfassend eine Zuführeinheit (6),
einen Rahmen (3) mit einer Stammzuführbahn (5), deren Transportrichtung (Z) mit einer Längsachse eines Baumstammes (2), der in den Erntemaschinenkopf aufgenommen worden ist, zusammenfällt, und wobei die Zuführeinheit umfasst,
zwei Zuführeinheiten (11, 12), die jeweils an einem Greifarm (3a, 3b) abgestützt sind, zum Schwenken in Richtung hin zu und weg von der Stammzuführbahn (5) um eine Achse (3c), die sich in dem Erntemaschinenkopf für jeden Greifarm befinden, um einen Baumstamm (2) zwischen ihnen greifen zu können,
wobei jede Zuführeinheit (11, 12) eine Kombination aus einem Paar einer ersten Zuführwalze (11a, 11b) und einer zweiten Zuführwalze (12a, 12b) abstützt, wobei
die ersten Zuführwalzen (11a, 11b) jeweils um eine Mittelachse (11a', 11b') drehbar konfiguriert sind und radial hervorstehende Greifmittel (13, 14) zum Eindringen in den Baumstamm umfassen, um zu bewirken, dass er sich um seine Längsachse dreht, so dass Rinde vom Umfang des Stammes freigegeben wird, während er gleichzeitig in Transportrichtung vorwärts geführt wird, und
die zweiten Zuführwalzen (12a, 12b) jeweils um eine Mittelachse (12a', 12b') drehbar konfiguriert sind,
wobei die beiden Mittelachsen (11a', 11b') der ersten Zuführwalzen (11a, 11b) in Transportrichtung (Z) gesehen jeweils so weit voneinander beabstandet angeordnet sind, dass sie während des Greifvorgangs ein auf den Baumstamm (2) wirkendes Krafterzeugungspaar bilden, das den Baumstamm mit einem Hebel (a1, a2) bzw. einem Drehmoment um eine zentrale Schwenkachse (CL), die quer durch den Baumstamm verläuft, beaufschlagen kann,
und die beiden Mittelachsen (12a', 12b') der zweiten Zuführwalzen (12a, 12b) in Transportrichtung (Z) gesehen jeweils so weit von der zentralen Schwenkachse (CL) beabstandet angeordnet sind, dass sie gemeinsam eine Gegenkraft bilden, die mit einem betreffenden Hebel (b1, b2) wirken kann, um den Baumstamm abzustützen.

2. Erntemaschinenkopf nach Anspruch 1, wobei die ersten und zweiten Zuführwalzen (jeweils 11a, 12a und 11b, 12b), die paarweise an jeder Zuführeinheit (11, 12) angeordnet sind, in Transportrichtung (Z) gesehen umgekehrt derart an der jeweiligen Zuführeinheit (11, 12) abgestützt sind, dass die ersten und zweiten Zuführwalzen sich, wenn sie mit einem Baumstamm (2) zusammenwirken, in einer gegenseitigen Kreuzkonfiguration und diagonal gegenüberliegenden gedachten Quadranten (I, II, III, IV) der Stammzuführbahn (5) befinden.

3. Erntemaschinenkopf nach einem der Ansprüche 1 bis 2, wobei die Hebel (a1, a2) zwischen den Mittelachsen (11a', 11b') der ersten Zuführwalzen (11a, 11b) und dem zentralen Schwenkpunkt (CL) kürzer sind als die Hebel (b1, b2) zwischen den Mittelachsen (12a', 12b') der zweiten Zuführrollen (12a, 12b) und dem zentralen Schwenkpunkt (CL).

4. Erntemaschinenkopf nach einem der Ansprüche 1 bis 3, wobei die erste Zuführwalze (11a, 11b), die Bestandteil jeder Zuführeinheit (11, 12) ist, auf eine Weise angetrieben wird, die eine Drehung ermöglicht und eine Oberfläche mit einem größeren Betriebsarbeitsbereich gegen den Baumstamm (2) zeigt als eine Oberfläche der zweiten Zuführwalze (12a, 12b), die Bestandteil der Zuführeinheit ist.

5. Erntemaschinenkopf nach einem der Ansprüche 1 bis 4, wobei eine Mittellinie, die diagonal durch die Mittelachsen (11a', 11b') der beiden ersten Zuführwalzen (11a, 11b) verläuft, und eine Mittellinie, die diagonal durch die Mittelachsen (12a', 12b') der beiden zweiten Zuführwalzen (12a, 12b) verläuft, jeweils eine Längsachse, die mit der Transportrichtung (Z) der Stammzuführbahn (5) zusammenfällt, in einem spitzen Winkel (a1, a2) schneiden.

6. Erntemaschinenkopf nach einem der Ansprüche 1 bis 5, wobei der absolute Abstand (D1) zwischen den Mittelachsen (11a', 11b') der beiden ersten Zuführwalzen (11a, 11b) kürzer ist als der absolute Abstand zwischen den Mittelachsen (12a', 12b') der beiden zweiten Zuführwalzen (12a, 12b), im Verhältnis zu einer Längsachse, die mit der Transportrichtung (Z) der Stammzuführbahn (5) zusammenfällt.

7. Erntemaschinenkopf nach einem der Ansprüche 1 bis 6, wobei jede der zweiten Zuführwalzen (12a, 12b) einen integralen Antriebsmotor für den Betrieb in einer Weise umfassen kann, die eine Drehung der Zuführwalze ermöglicht, oder aus Zuführwalzen besteht, die als Übertragungsrollen bekannt sind, die frei drehbar sind.

8. Erntemaschinenkopf nach einem der Ansprüche 1 bis 7, wobei jede erste Zuführwalze (11a, 11b) eine im Wesentlichen sanduhrglasförmige Form aufweist, deren Oberfläche, die mit einem Baumstamm zusammenwirkt, im axialen Schnitt durch die Mittelachsen (11a', 11b') der Walzen betrachtet, einen durch eine Generatrix erzeugten Bogen zeigt, der in Richtung hin zur Mittelachse konkav oder gekrümmt ist.

9. Erntemaschinenkopf nach Anspruch 8, wobei jede zweite Zuführwalze (12a, 12b) eine Kegelstumpfform aufweist, deren Oberfläche, die mit einem Baumstamm zusammenwirkt, im axialen Schnitt durch die Mittelachsen (12a', 12b') der Walzen betrachtet, einen durch eine Generatrix erzeugten Bogen zeigt, der in Richtung hin zur Mittelachse konkav oder gekrümmt ist, dessen Bogenlänge jedoch kürzer ist als die der ersten Zuführwalzen.

10. Erntemaschinenkopf nach einem der Ansprüche 1 bis 9, wobei nicht nur jede erste Zuführwalze (11a, 11b), sondern auch jede zweite Zuführwalze (12a, 12b) auf ihrer Arbeitsfläche mit radial hervorstehenden Greifmitteln (13, 14) ausgestattet ist, die dazu bestimmt sind, in einen Baumstamm (2) einzudringen.

11. Erntemaschinenkopf nach Anspruch 10, wobei das Greifmittel (13) der ersten Zuführwalzen (11a, 11b) eine Reihe von radial hervorstehenden nockenartigen Elementen umfasst, die während der Bildung von Entrindungsmessern spiralförmig über die Oberfläche verlaufen.

## Revendications

1. Tête d'abattage-écorçage (1) du type à une seule prise, comprenant une unité d'alimentation (6),
un cadre (3) avec une piste d'alimentation en tronc (5) dont la direction de transport (Z) coïncide avec un axe longitudinal d'un tronc d'arbre (2) qui a été pris dans la tête d'abattage, et dans laquelle ladite unité d'alimentation comprend
deux unités d'alimentation (11, 12) qui sont chacune supportées sur un bras de préhension (3a, 3b) pour pivoter vers et à l'écart de la piste d'alimentation en tronc (5) autour d'un axe (3c) situé dans la tête d'abattage pour chaque bras de préhension, afin de pouvoir saisir un tronc d'arbre (2) entre eux, chaque unité d'alimentation (11, 12) supportant une combinaison d'une paire d'un premier rouleau d'alimentation (11a, 11b) et d'un deuxième rouleau d'alimentation (12a, 12b)
dans laquelle
les premiers rouleaux d'alimentation (11a, 11b) sont chacun configurés pour être tournés autour d'un axe central (11a', 11b') et comprennent des moyens de préhension faisant saillie radialement (13, 14) pour pénétrer dans le tronc d'arbre afin de l'amener à tourner autour de son axe longitudinal si bien que l'écorce est libérée de la circonférence du tronc en même temps qu'il est alimentée vers l'avant dans la direction de transport,
et
les deuxièmes rouleaux d'alimentation (12a, 12b) sont chacun configurés pour être tournés autour d'un axe central (12a', 12b'),
respectivement les deux axes centraux (11a', 11b') des premiers rouleaux d'alimentation (11a, 11b) sont disposés à une telle distance l'un de l'autre lorsqu'ils sont vus dans la direction de transport (Z) qu'ils forment pendant l'opération de préhension une paire de production de force qui agit sur le tronc d'arbre (2) qui peut s'appliquer au tronc d'arbre respectivement avec un levier (a1, a2) et un couple de rotation autour d'un axe central de pivot (CL) qui passe transversalement à travers le tronc d'arbre,
et les deux axes centraux (12a', 12b') des deuxièmes rouleaux d'alimentation (12a, 12b) sont disposés chacun à une telle distance de l'axe central de pivotement (CL) lorsqu'ils sont vus dans la direction de transport (Z) qu'ils forment ensemble une force antagoniste qui peut agir avec un levier pertinent (b1, b2) pour supporter le tronc d'arbre.

2. Tête d'abattage-écorçage selon la revendication 1, dans laquelle respectivement les premiers et deuxièmes rouleaux d'alimentation (11a, 12a et 11b, 12b) qui sont agencés par paires sur chaque unité d'alimentation (11, 12), lorsqu'ils sont vus dans la direction de transport (Z), sont supportés de manière inverse sur l'unité d'alimentation pertinente (11, 12) si bien que lesdits premiers et deuxièmes rouleaux d'alimentation sont, lorsqu'ils sont en interaction avec un tronc d'arbre (2), dans une configuration transversale mutuelle et sont situés dans des quadrants imaginaires diagonalement opposés (I, II, III, IV) de la piste d'alimentation en tronc (5).

3. Tête d'abattage-écorçage selon l'une quelconque des revendications 1 à 2, dans laquelle les leviers (a1, a2) situés entre les axes centraux (11a', 11b') des premiers rouleaux d'alimentation (11a, 11b) et le point central de pivotement (CL) sont plus courts que les leviers (b1, b2) situés entre les axes centraux (12a', 12b') des deuxièmes rouleaux d'alimentation (12a, 12b) et le point central de pivotement (CL).

4. Tête d'abattage-écorçage selon l'une quelconque des revendications 1 à 3, dans laquelle le premier rouleau d'alimentation (11a, 11b) qui est un composant de chaque unité d'alimentation (11, 12) est entraîné d'une manière qui permet la rotation et présente une surface avec une plus grande zone de travail opérationnelle contre le tronc d'arbre (2) qu'une surface du deuxième rouleau d'alimentation (12a, 12b) qui est un composant de l'unité d'alimentation.

5. Tête d'abattage-écorçage selon l'une quelconque des revendications 1 à 4, dans laquelle une ligne médiane qui s'étend en diagonale à travers les axes centraux (11a', 11b') des deux premiers rouleaux d'alimentation (11a, 11b) et une ligne médiane qui s'étend en diagonale à travers les axes centraux (12a', 12b') des deux deuxièmes rouleaux d'alimentation (12a, 12b) coupent chacun un axe longitudinal qui coïncide avec la direction de transport (Z) de la piste d'alimentation en tronc (5) à un angle aigu (α1, α2).

6. Tête d'abattage-écorçage selon l'une quelconque des revendications 1 à 5, dans laquelle la distance absolue (D1) entre les axes centraux (11a', 11b') des deux premiers rouleaux d'alimentation (11a, 11 b) est plus courte que la distance absolue distance (D2) entre les axes centraux (12a', 12b') des deux deuxièmes rouleaux d'alimentation (12a, 12b), par rapport à un axe longitudinal qui coïncide avec la direction de transport (Z) de la piste d'alimentation en tronc (5).

7. Tête d'abattage-écorçage selon l'une quelconque des revendications 1 à 6, dans laquelle chacun desdits deuxièmes rouleaux d'alimentation (12a, 12b) peut comprendre un moteur d'entraînement intégré pour un fonctionnement d'une manière qui permet la rotation du rouleau d'alimentation, ou est constitué par rouleaux d'alimentation, appelés rouleaux de transfert, qui peuvent tourner librement.

8. Tête d'abattage-écorçage selon l'une quelconque des revendications 1 à 7, dans laquelle chaque premier rouleau d'alimentation (11a, 11b) présente une forme qui est essentiellement en forme de sablier, et dont la surface qui interagit avec un tronc d'arbre, lorsqu'il est vu en coupe axiale par les axes centraux (11a', 11b') des rouleaux, présente un arc généré par une génératrice et concave ou courbé en direction vers ledit axe central.

9. Tête d'abattage-écorçage selon la revendication 8, dans laquelle chaque deuxième rouleau d'alimentation (12a, 12b) présente la forme d'un tronc de cône dont la surface qui interagit avec un tronc d'arbre, vue en coupe axiale par les axes centraux (12a', 12b') des rouleaux, présente un arc généré par une génératrice et concave ou courbé vers ledit axe, mais dont la longueur d'arc est inférieure à celle des premiers rouleaux d'alimentation.

10. Tête d'abattage-écorçage selon l'une quelconque des revendications 1 à 9, dans laquelle non seulement chaque premier rouleau d'alimentation (11a, 11b) mais également chaque deuxième rouleau d'alimentation (12a, 12b) est équipé sur sa surface de travail de moyens de préhension faisant saillie radialement (13, 14) destinés à pénétrer dans un tronc d'arbre (2).

11. Tête d'abattage-écorçage selon la revendication 10, dans laquelle le moyen de préhension (13) des premiers rouleaux d'alimentation (11a, 11b) comprend une série d'éléments en forme de came faisant saillie radialement qui, lors de la formation des couteaux d'écorçage, s'étendent en spirale à travers la surface.
